Europäisches Patentamt

European Patent Office

Office européen des brevets

(11) Veröffentlichungsnummer: **0 517 143 A2**

# EUROPÄISCHE PATENTANMELDUNG

(21) Anmeldenummer: **92109213.6**

(51) Int. Cl.⁵: **B26D 7/20**

(22) Anmeldetag: **01.06.92**

(30) Priorität: **03.06.91 DE 4118194**

(43) Veröffentlichungstag der Anmeldung:
**09.12.92 Patentblatt 92/50**

(84) Benannte Vertragsstaaten:
**DE ES FR IT**

(71) Anmelder: **BULLMER SPEZIALMASCHINEN GmbH**

W-7421 Mehrstetten(DE)

(72) Erfinder: **Jung, Rolf, Dipl.-Ing.**
**Jahnstrasse 3**
**W-7420 Münsingen(DE)**

(74) Vertreter: **Melzer, Wolfgang, Dipl.-Ing.**
**Mitscherlich und Partner, Steinsdorfstrasse 10**
**W-8000 München 22(DE)**

(54) **Fördertisch für Flachmaterial wie Stoffe, Folien oder dergleichen.**

(57) Bei einer Zuschneidevorrichtung (1) für Flachmaterial mit einem Fördertisch (2) mit einem umlaufend antreibbaren Transportband (3), das aus in Förderrichtung hintereinanderliegend angeordneten und gelenkig miteinander verbundenen Transportbandgliedern (9) besteht, die im Bereich des Obertrums des Transportbandes (3) mit einem luftdurchlässigen Tragmaterial, insbesondere in Form von nach oben stehenden Borsten (23) besetzt sind, dessen Oberseite eine Tragmatte (4) zur Auflage des Fachmaterials bildet, und die im Bereich des Tragmaterials (23) an eine Unterdruckquelle anschließbar sind, wobei sich vor und hinter dem Transportband (3) jeweils eine Abdeckplatte (28,29) an die Tragmatte (4) anschließt, ist im Anfangs- und/oder Endbereich (3a,3b) des Transportbandes (3) ein sich über die Breite des Transportbandes (3) erstreckendes, zwischen der zugehörigen Abdeckplatte (28,29) und dem Transportband (3) wirksames leistenförmiges Dichtungselement (33) vorgesehen, das an seinem oberen Rand gehalten ist, sich frei nach unten erstreckt und in die Förderrichtung (11) elastisch biegbar oder elastisch komprimierbar ist.

FIG. 2

Die Erfindung bezieht sich auf eine Zuschneidevorrichtung nach dem Oberbegriff des Anspruchs 1, 4 oder 12.

Eine Zuschneidevorrichtung dieser Arten ist dazu eingerichtet, eine auf dem Fördertisch abgelegte Stofflage nach einem Schnittmuster mit einer Zuschneidemaschine zu schneiden, die an einem geeigneten Träger auf dem Fördertisch verfahrbar ist und an einem Ausleger oder an einer im Koordinatensystem des Fördertisches verfahrbaren Traverse gehalten sein kann. Der Fördertisch wird durch ein in Förderrichtung um zwei Umlenkrollen umlaufend antreibbares Transportband gebildet, das aus in Förderrichtung hintereinanderliegend angeordneten und gelenkig miteinander verbundenen Transportbandgliedern besteht, die an ihrer Oberseite jeweils mit einem luftdurchlässigen Material, insbesondere Borsten, besetzt sind, wobei die Borsten der im Obertrum befindlichen Transportbandglieder eine Tragmatte für die Stofflage bilden und oberseitig aus zwei Gründen mit einem luftdurchlässigen, nachgiebigen Material, wie insbesondere Borsten, besetzt sind. Zum einen ermöglicht dies bei Beaufschlagung des luftdurchlässigen Materials im Bereich der Transportglieder mit Unterdruck die Stofflage bzw. die geschnittenen mit dem Unterdruck in ihrer bestimmten Position auf der Tragmatte zu halten und zum anderen das Eindringen des Schneidmessers in das nachgiebige Material, damit die Stofflage geschnitten werden kann.

Zur Beaufschlagung der Transportbandglieder im Bereich ihrer tragenden Bereiche mit Unterdruck sind bereits verschiedene Ausgestaltungen vorgeschlagen worden. Gemäß DE-OS 33 09 944 ist eine das endlose Transportband umschließende Unterdruckkammer vorgesehen, so daß alle Transportbandglieder des Obertrums mit Unterdruck beaufschlagt sind. In den meisten Fällen, bei denen das luftdurchlässige, nachgiebige Material durch Borsten gebildet ist, weisen die Transportbandglieder einen perforierten Boden auf, auf dem die Borsten befestigt sind. Zur Abdichtung des gesamten, unter Unterdruck stehenden Obertrums des Transportbandes sind seitlich zwischen dem Transportband und den Seitenwänden des das Transportband umschließenden Gehäuses Dichtungselemente vorgesehen.

Es ist z.B. aus der DE-PS 36 30 363 bekannt, nur Teilbereiche der Tragmatte mit Unterdruck zu beaufschlagen, um die Saugluftverluste bzw. die erforderliche Saugluftleistung so gering wie möglich zu halten. Dies kann durch gegeneinander abgedichtete Unterteilungen des Transportbandes in bestimmte Saugluftabschnitte erreicht werden, die gezielt an eine Unterdruckquelle anschließbar sind. Solche Unterteilungen können den Transportbandgliedern entsprechen, wobei die Transportbandglieder gezielt an eine Unterdruckquelle anschließbare Unterdruckkammern aufweisen, die durch zwischen den Transportbandgliedern vorhandenen Dichtungen gegeneinander abgedichtet sind, s. z.B. Fig. 16 von DE-PS 36 30 363 und zugehörige Beschreibung. Die Unterdruckleitungen, mit denen die Unterdruckkammern der Transportbandglieder verbindbar sind, können unterhalb des Obertrums der Tragmatte oder auch seitlich der Tragmatte verlaufen, wie es die Fig. 14 und 15 zeigen. Bei einer seitlichen Anordnung der Unterdruckleitung ist zwischen letzterer und den Seitenflächen der Transportbandglieder eine sogenannte Endkappe dicht angeordnet, wobei der Durchgang des Unterdrucks zu den Unterdruckkammern der Transportbandglieder mittels Querlöchern in der Endkappe und Fensteröffnungen in der Unterdruckleitung so gesteuert ist, daß nur dann, wenn diese Löcher miteinander korrespondieren, der Unterdruck in den Unterdruckkammern der Transportbandglieder ansteht.

Zur Verbesserung der Wirksamkeit des Unterdrucks auf die Stofflage ist es bekannt, eine Kunststoffolie auf die Stofflage zu legen, wodurch die erforderliche Saugluftleistung verringert werden kann.

Bei allen bekannten Ausgestaltungen mit Unterdruck-Halterung der Stofflage auf dem Transportband stellen der Anfangs- und Endbereich des Transportbandes Bereiche dar, in denen die Transportbandglieder sich aufgrund ihrer Umlenkung sowohl voneinander als auch von der Stofflage bzw. Folie entfernen und deshalb beträchtliche Sauglustverluste auftreten.

Der Erfindung liegt die Aufgabe zugrunde, bei einer Zuschneidevorrichtung der in den Ansprüchen 1, 4 oder 12 angegebenen Arten die Sauglustverluste zu verringern.

Diese Aufgabe wird durch die Merkmale der Ansprüche 1, 4 und 8 gelöst. Vorteilhafte Weiterbildungen der Erfindung sind in den Unteransprüchen beschrieben.

Bei der erfindungsgemäßen Zuschneidevorrichtung nach Anspruch 1 und/oder 4 ist jeweils im zwischen dem umgelenkten Transportbandbereich und der vorhandenen Abdeckplatte vorhandenen Zwickel jeweils ein sich quer und horizontal erstreckendes Dichtungselement zur Abdichtung des Spaltes zwischen den anlaufenden bzw. ablaufenden Transportbandgliedern und der zugehörigen Abdeckplatte vorgesehen. Aufgrund des vorhandenen nachgiebigen Tragmaterials bzw. der Borsten, das bzw. die einerseits am Dichtungselement anliegen, und der Anlage des Dichtungselementes selbst an der Unterseite der zugehörigen Abdeckplatte läßt sich der zugehörige Zwickel abdichten. Als Dichtungselement eignet sich eine hochkant angeordnete Platte, deren Höhe vorzugsweise wenigstens der Höhe der Borsten entspricht. Es ist vorteilhaft, im Endbereich des Transportbandes das Dichtungselement als elastisch ausbiegbare Dichtungslippe auszubilden, die unter dem Druck der Borsten ausweichen kann und sich aufgrund ihrer Elastizität immer wieder in eine an die Borsten anliegende Abdichtungsstellung zurückbewegt. Da sowohl im Anlauf- als auch Ablaufbereich des Transportbandes die jeweils einander benachbarten Transportbandglieder aufgrund der Umlenkung voneinander abgeknickt sind, ist es vorteilhaft, die Dichtungselemente in Längsrichtung des Förderers hin und her bewegbar anzuordnen, um sie im jeweils vorhandenen Borstenzwickel zwischen dem ersten Transportbandglied der Tragmatte und dem an- oder ablaufenden Transportbandglied in Dichtungsposition zu bringen und beim Anlauf- bzw. Ablauf des nächsten Transportbandgliedes synchron mit der Transportbandbewegung aus der Abdichtungsstellung heraus und wieder am nächsten Transportbandglied in seine Abdichtungsstellung zu bewegen. Im Endbereich des Transportbandes kann dies durch eine elastische Biegsamkeit oder eine nachgiebige Anordnung insgesamt des leisten- bzw. lippenförmigen Dichtungselements erreicht werden. Im Anfangsbereich des Transportbandes muß das Dichtungselement gegen den Widerstand der Borsten des anlaufenden Transportbandgliedes zurückbewegt werden. Hierzu eignet sich ein synchron mit der Transportbandbewegung arbeitender Antrieb zur Hin- und Herbewegung des zugehörigen Dichtungselements. Ein solcher Antrieb läßt sich auch für das im Endbereich des Transportbands angeordnete Dichtungselement verwirklichen.

Die vorbeschriebenen erfindungsgemäßen Lösungen eignen sich nicht nur für eine Zuschneidevorrichtung mit einem das Transportband aufnehmenden Gehäuse, das im wesentlichen insgesamt vom Unterdruck beaufschlagt ist, sondern auch für solche Zuschneidevorrichtungen, bei denen den Transportbandgliedern zugeordnete Unterdruckkammern gezielt mit Unterdruck beaufschlagt werden. Bei einer letzteren Zuschneidevorrichtung könnte man die Unterdruckbeaufschlagung zwar so auslegen, daß z.B. das erste und das letzte Transportbandglied der Tragmatte nicht an die Unterdruckquelle angeschlossen werden und somit auch eine Abdichtung im Zwickel des Anfangs- und Endbereichs des Transportbandes entfallen könnte, jedoch wäre dann ein Zuschneiden im Bereich des ersten und letzten Transportbandgliedes der Tragmatte wegen mangelnder Unterdruckhalterung der Stofflage kaum möglich. Die erfindungsgemäße Ausgestaltung ermöglicht es somit, bei einer solchen Zuschneidevorrichtung den Schneidbereich der Tragmatte maximal auszunutzen.

Die im Anspruch 12 enthaltene Lösung zeichnet sich durch einen sehr geringen Aufwand aus, wodurch eine kostengünstige Herstellung und dabei eine sichere Funktion sowohl für das Transportband als auch für die Abdichtung gewährleistet ist. Insbesondere Saugräume unterhalb der Tragmatte und ein perforierter Boden der Tragmatte sind nicht erforderlich.

Weitere Merkmale der Unteransprüche tragen ebenfalls zur vorliegenden Problemlösung bei und zeichnen sich dadurch aus, daß einfache und kleine Bauweisen, eine gute Abdichtung des von der Folie überdeckten Bereichs der Stofflage und auch eine einfache und funktionssichere Unterdruckzuführung gewährleistet sind.

Nachfolgend wird die Erfindung anhand von in einer vereinfachten Zeichnung dargestellten bevorzugten Ausführungsbeispielen näher erläutert. Es zeigt:

Fig. 1 eine erfindungsgemäße Zuschneidevorrichtung für Flachmaterial wie Stoffe, Folien oder dgl. in perspektivischer Darstellung;

Fig. 2 die Zuschneidevorrichtung im vertikalen Längsschnitt;

Fig. 3 den vorderen Endbereich der Zuschneidevorrichtung in abgewandelter Ausgestaltung im vertikalem Längsschnitt und in vergrößerter Darstellung;

Fig. 4 den Teil-Querschnitt IV-IV in Fig. 1.

Die Hauptteile der Zuschneidevorrichtung 1 sind ein Fördertisch 2 mit einem umlaufend antreibbaren Transportband 3, dessen Obertrum eine Tragmatte 4 für eine Stofflage 5 bildet, und eine Zuschneidemaschine 6, die an einer Querschiene 7 quer zum Fördertisch 2 verfahrbar ist und mit einem die Querschiene 7 aufweisenden Wagen 8 in einem Führungssystem des Fördertisches 2 in dessen Längsrichtung verfahrbar ist. Die Zuschneidemaschine 6 kann somit zum Zweck des Schneidens der Stofflage 5 nach einem Schnittmuster an jede beliebige Stelle der Oberseite des Fördertisches 2 verfahren werden. Die gesteuerte Verschiebung der Zuschneidemaschine 6 bzw. des Wagens 8 erfolgt durch einen motorischen Antrieb mittels einer automatischen Steuerung. Es ist jedoch auch möglich, die Zuschneidemaschine 6 von Hand entsprechend vorgegebenen Schnittmusterlinien zu verschieben. Für einen solchen Handbetrieb wird die Zuschneidemaschine 6 vorzugsweise an einem am Fördertisch 2 angeordneten Schwenkausleger gehalten und geführt.

Das in den Fördertisch 2 integrierte Transportband 3 besteht aus einer Vielzahl in der Längsrichtung des Transportbands 3 hintereinanderliegend angeordneten und gelenkig miteinander verbundenen Transportbandgliedern 9, die sich über die gesamte Breite des Transportbandes 3 erstrecken. Die Transportglieder 9 bestehen jeweils aus einem sich quer zur Förderrichtung 11 erstreckenden Tragkörper 12 in Profilbauweise, vorzugsweise ein U- oder C-förmiges Profil rechteckförmigen Querschnitts, wobei die Tragkörper 12 mit ihren flachen Profil-Bodenplatten 13 nach außen weisend angeordnet sind und jeweils eine ebene Tragfläche 14 für eine Bürste 15 bilden, deren Länge und Breite der Länge und Breite der zugehörigen Bodenplatte 13 entspricht und in außenseitig an die Bodenplatte 13 angesetzter Position mit der Bodenplatte verschraubt ist. Innenseitig sind an den Profilenden der Tragkörper 12 sich in Förderrichtung 11 erstreckende Laschen 16 in hochkantiger Anordnung paarweise befestigt, deren Enden die Tragkörper 12 jeweils vorder- und rückseitig überragen und mittels in diesen überragenden Enden vorgesehenen Gelenklöchern und darin eingesteckten Gelenkbolzen in Gelenken 17 miteinander verbunden sind. Zur Stabilisierung können Verstärkungswinkel 18 vorgesehen sein, deren vertikale Schenkel mit den Laschen und deren horizontale Schenkel an der Innenseite der Bodenplatten 13 vorzugsweise mit den Bürstenplatten 19 verschraubt sind.

In den Endbereichen des Fördertisches 2 sind an diesen jeweils ein Paar andeutungsweise dargestellte Umlenkrollen 20 um horizontale, sich quer zur Förderrichtung 11 erstreckende Drehachsen 22 drehbar gelagert, von denen ein Umlenkrollenpaar mittels eines nicht dargestellten Antriebs angetrieben ist. Die Anordnung des Transportbandes 3 ist so getroffen, daß die gleichhohen Spitzen der Borsten 23 der Bürsten 15 sich in etwa der Höhe der Tischfläche des Fördertisches 2 befinden, wobei die im Obertrum des Transportbandes 3 vorhandenen Transportbandglieder 9 mit ihren Borsten 23 die Tragmatte 4 für die Stofflage 5 bilden. Die einzelnen Borstenfelder liegen dabei nebeneinander. Vorzugsweise ist die Anordnung so getroffen, daß die rückseitigen und vorderseitigen Stirnflächen 24 der Tragkörper 12 und/oder die vorderseitigen und rückseitigen schmalen Stirnflächen 25 der Bürstenplatten 19 im Obertrum dicht aneinander liegen, wodurch eine durchgehende Bodenplatte 26 gebildet wird. An den seitlichen Enden der Tragkörper 12 ist deren Profil durch jeweils eine vertikale Seitenplatte 27 verschlossen.

Vor und hinter dem Transportband 3 sind in der Ebene des Fördertisches 2 und/oder in der Ebene der Tragmatte 4 eine Abdeckplatte 28,29 am Fördertisch 2 befestigt, die vorzugsweise die Borsten 23 der zugehörigen ersten bzw. letzten Bürste 15 der Tragmatte 4 geringfügig überlappt, wobei die zugehörige Abdeckplatte 28,29 im Bereich dieser Überlappung geringfügig eingebogen sein kann. Zwischen den Abdeckplatten 28,29 erstrecken sich somit die Borsten 23 der Bürsten 15 frei nach oben.

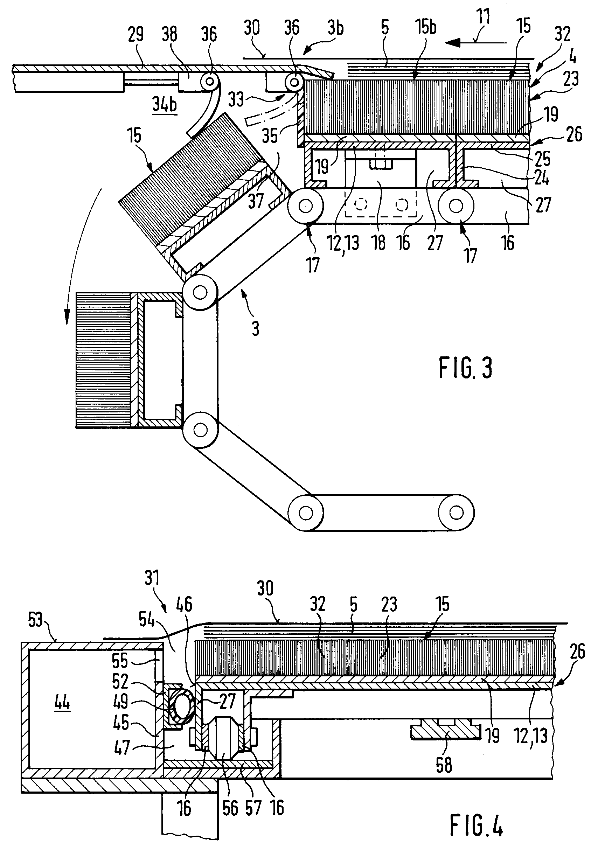

Im Fördertisch 2 ist eine mit 31 bezeichnete pneumatische Fixiereinrichtung für die Stofflage 5 bzw. die geschnittenen Teile auf der Tragmatte 4 vorgesehen. Mittels dieser pneumatischen Fixiereinrichtung 31 wird im Borstenraum 32, d.h. oberhalb der aus den einzelnen Bürstenplatten 19 bzw. Tragkörpern 12 bestehenden Bodenplatte 26 ein Unterdruck erzeugt, der die Stofflage 5 gegen die Borstenspitzen zieht und somit fixiert. Der Unterdruck wird mittels Saugluft erzeugt. Um den Saugluftbedarf so gering wie möglich zu halten, ist die Stofflage 5 mit einer Folie 30 abgedeckt, die die Abdeckplatte 28,29 überlappt. Front- und rückseitig ist der Borstenraum 23 durch leistenförmige Dichtungselemente in hochkant angeordneten Positionen abgedeckt, die sich im Anfangsbereich 3a und im Endbereich 3b des Transportbandes 3 im zwischen den Abdeckplatten 28,29 und den an- bzw. ablaufenden Bürsten 15 vorhandenen Zwickel 34a,34b befinden. Gemäß Fig. 3 ist im Endbereich 3b des Transportbandes 3 das Dichtungselement 33 durch einen steifen oder biegsamen Dichtungsstreifen 35 gebildet, der von einem an der Unterseite der zugehörigen Deckplatte 29 dicht anliegenden Dichtungstragkörper 36 frei herunterragt, der mit dem Dichtungsstreifen 35 einstückig hergestellt sein kann. Der Dichtungsstreifen 35 ist in seiner Höhe so groß bemessen, daß sein unterer freier Rand bis zur Ebene der Bodenplatte 26 reicht, vorzugsweise diese geringfügig nach unten überragt. Der Dichtungstragkörper 36 mit dem Dichtungsstreifen 35 ist in der Längsrichtung des Transportbandes 3 so positioniert, daß er in der Ruhestellung des Transportbandes 3 an der Vorderseite der letzten Tragmatten-Bürste 15b und somit an der Vorderseite der zugehörigen Bürstenplatte 19 anliegt. Die Anordnung dieser vordersten Bürste 15b der Tragmatte 4 ist bezüglich der Umlenkung des Transportbandes 3 so angeordnet, daß die dieser Bürste 15b nach vorne benachbarte Bürste 15 etwas in Umlaufrichtung abgekippt ist, wodurch ein kleiner Zwickel bzw. Freiraum 37 zwischen diesen Bürsten gebildet ist, in dem sich der Dichtungsstreifen 35 befindet. In der in Fig. 3 dargestellten Position ist der Borstenraum 32 somit vorderseitig durch den Dichtungsstreifen 35 dicht verschlossen. Der Dichtungssteifen 35 besteht vorzugsweise aus elastisch ausbiegbarem Material, insbesondere Kunststoff, und er kehrt nach einer Ausbiegung aufgrund seiner elastischen Eigenspannung und seines Eigengewichts selbsttätig in die senkrechte Verschlußstellung zurück, in der er durch den Unterdruck im Borstenraum forciert gehalten wird. Im Betrieb des Transportbandes 3 wird der Dichtungsstreifen 35 durch den Widerstand der Borsten 23 in die andeutungsweise dargestellte, in Fig. 3 nach links geschwenkte Position weggedrückt. Auch in dieser Position übt der Dichtungsstreifen 35 eine wesentliche Dichtungsfunktion aus, weil trotz des Abstandes des Dichtungsstreifens 35 von der Bürstenplatte 19 die in diesen Bereich zusammengedrückten Borsten 23 die Abdichtung im wesentlichen gewährleisten. Deshalb ist die Abdichtung auch dann gewährleistet, wenn das Transportband 3 in einer Position zum Stehen kommt, in der der Dichtungsstreifen 35 sich mittig auf einer Bürste befindet. Im Freiraum 37 fällt der Dichtungsstreifen 35 selbsttätig in seine in Fig. 3 dargestellte Abdichtungsposition.

Um den an der Abdeckplatte 29 befestigten Dichtungstragkörper 36 bzw. den Dichtungsstreifen 35 in Längsrichtung des Förderbandes 3 an unterschiedliche Stillstandsstellungen der jeweils vordersten Bürste 15 anpassen zu können, ist es vorteilhaft, den Dichtungstragkörper 36 in Längsrichtung des Transportbandes 3 verschiebbar anzuordnen, wobei hierzu ein Antrieb oder ein elastisches Rückstellglied vorzugsweise in Form einer Feder angeordnet sein kann. Ein Antrieb kann bezüglich der Hin- und Herbewegung des Dichtungselements 33 so gesteuert sein, daß der Dichtungsstreifen 35 in Abhängigkeit der Bewegung des Transportbandes 3 gezielt jeweils in den Freiraum 37 eingeschoben wird. Bei einer federelastischen Rückstellung des Dichtungselements 33 erfolgt dies selbsttätig. Zur Verschiebung des Dichtungselements 33 kann ein Schieber 38 vorgesehen sein, der das Dichtungselement 33 trägt und z.B. mittels der Kolbenstange eines frontseitig angeordneten Zylinders hin und her verschoben werden kann, wie es in Fig. 3 angedeutet ist.

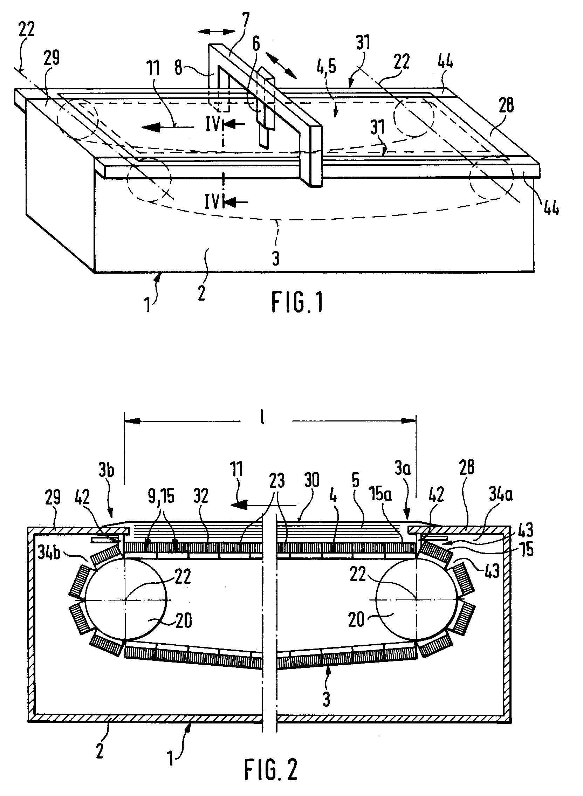

Im Anfangsbereich 3a des Transportbandes 3 kann zur Abdichtung des hier mit 34a bezeichneten Zwickels zwischen der Abdeckplatte 28 und dem Transportband 3 ein Dichtungselemement 42 (Fig. 2) vorgesehen sein, das mit dem Dichtungselement 33 in seinen vorbeschriebenen Ausgestaltungsvariationen prinzipiell und funktionell identisch sein kann, jedoch bezüglich seiner Bewegungen in und außer Abdichtungsstellung umgekehrt funktioniert. Es ist z.B. auch hier möglich, das Dichtungselement unter Ausnutzung der sich zwischen der ersten Bürste 15a der Tragmatte 4 und der davor anlaufenden Bürsten 15 sich ergebenden Freiraums 34a so zu steuern, daß das Dichtungselement 42 in den sich ebenfalls vorbewegenden Freiraum 43 eingeschoben wird zur rückseitigen Abdichtung des Borstenraums 32 an der Rückseite der ersten Bürste 15a der Tragmatte 4. Ein Unterschied zwischen dem Anfangsbereich 3a und dem Endbereich 3b des Transportbandes 3 besteht insofern, als das Transportband 3 im Anfangsbereich 3a einen Einzug auf das Dichtungselement 42 ausübt, der die Dichtungsfunktion jedoch nicht wesentlich behindert.

Wie bereits im Endbereich 3b kann auch im Anfangsbereich 3a des Transportbandes 3 das Dichtungselement 42 durch eine vorzugsweise vertikale Dichtungsleiste gebildet sein, die im Gegensatz zum elastischen Dichtungsstreifen 35 steif sein kann, damit sie durch die Einzugswirkung der Bürsten 15 nicht eingezogen wird.

Die pneumatische Fixiereinrichtung 31 umfaßt ein Saugluft-Leitungssystem, das an den Borstenraum 32 anschließbar ist, um darin den angestrebten Unterdruck zu erzeugen. Gemäß Fig. 4 ist an einer oder an beiden Längsseiten des Fördertisches 2 ein Saugluftrohr 44 vorzugsweise viereckigen Querschnitts angeordnet, dessen vertikale Innenwand 45 sich in einem geringen Abstand 47 von z.B. etwa ein bis zwei Zentimeter oder weniger von den Seitenflächen 46 der Tragkörper 12 bzw. ihrer Seitenplatten 27 befindet. Das Saugluftrohr 44 erstreckt sich etwa über die gesamte Länge 1 der Tragmatte 4 und ist an beiden Enden verschlossen. Zwischen den Seitenflächen 46 und der vertikalen Innenwand 45 ist ein Dichtungsstreifen 49 angeordnet, der sich über die gesamte Länge des Saugluftrohrs 44 erstreckt und an dessen vertikalen Innenwand 45 gehalten ist. Bei der vorliegenden Ausgestaltung ist der Dichtungsstreifen 49 durch einen Dichtungsschlauch gebildet, der sich in etwas flachgedrückter Position in einer Halterung befindet, die vorzugsweise durch eine an der vertikalen Innenwand befestigte Halteleiste 52 U-förmigen Querschnitts gebildet ist, zwischen deren Schenkel der Dichtungsschlauch sitzt. Die Oberseite 53 des Saugluftrohrs 44 befindet sich in Höhe der Spitzen der Borsten 23. Wie aus Fig. 4 zu erkennen ist, ist die Folie 30 so breit bemessen, daß sie die vertikale Innenwand 45 überlappt und auf der Oberseite 53 des Saugluftrohrs 44 aufliegt. Oberhalb des Dichtungsstreifens 48 ist somit zwischen den Bürsten 15 und dem Saugluftrohr 44 ein Freiraum 54 vorhanden, der sich über die gesamte Länge des Saugluftrohrs 44 bzw. der Tragmatte 4 erstreckt. In der vertikalen Innenwand 45 ist oberhalb der Abdichtung 48 wenigstens ein Loch 55, vorzugsweise mehrere, auf die Länge verteilt angeordnete Löcher, vorgesehen, durch das bzw. die das Saugluftrohr 44 mit dem Freiraum 54 und mit dem Borstenraum 32 in Verbindung steht, der ein Teil des Borstenraums 32 ist.

Zur Aktivierung der pneumatischen Fixiereinrichtung 31 wird der Innenraum des Saugluftrohrs 44 z.B. mittels eines Ventils (nicht dargestellt) an eine Saugluftquelle angeschlossen und somit darin ein Unterdruck erzeugt. Dieser Unterdruck setzt sich durch das wenigstens eine Loch 55 in den Freiraum 54 und durch die Borsten 23 in den gesamten Borstenraum 32 fort und saugt die Stofflage 5 gegen die Borstenspitzen, wodurch die angestrebte Fixierung im gesamten Bereich der Tragmatte 4 erreicht wird. In diesem fixierten Zustand der Stofflage 5 kann das Zuschneiden erfolgen, bei dem das Messer der Zuschneidemaschine 6 in die Borstenspitzen einzutauchen vermag.

Das Vorhandensein eines Saugluftrohrs 44 an beiden Seiten des Fördertisches 2 gewährleistet eine gleichmäßige Verteilung des Unterdrucks im Borstenraum 32. Falls nur an einer Seite ein Saugluftrohr 44 angeordnet wird, ist auf der anderen Seite durch eine sich über die gesamte Länge und Höhe des Borstenraums 32 erstreckende Abdeckkung, z.B. eine Abdeckleiste, dafür zu sorgen, daß der Borstenraum 32 verschlossen ist.

Im Rahmen der Erfindung ist es möglich und auch vorteilhaft, am Saugluftrohr 44 vorzugsweise auf dessen Oberseite 53 einen vorzugsweise dünnen Abdeckschenkel zu befestigen, der die Tragmatte 4 seitlich nach innen in ihrem Randbereich überlappt und auf dessen Oberseite die Folie 30 aufliegt. Bei dieser Ausgestaltung kann der Abstand 47 auch größer bemessen sein, ohne daß die Gefahr besteht, daß die Folie 30 in den Freiraum 54 eingesaugt wird.

**Patentansprüche**

1. Zuschneidevorrichtung (1) für Flachmaterial wie Stoffe, Folien oder dgl., mit einem Fördertisch (2) mit einem um Umlenkrollen (20) umlaufend antreibbaren Transportband (3), das aus in Förderrichtung hintereinanderliegend angeordneten und gelenkig miteinander verbundenen Transportbandgliedern (9) besteht, die mit einem luftdurchlässigen Tragmaterial, insbesondere in Form von nach oben stehenden Borsten (23) besetzt sind, dessen Oberseite im Bereich des Obertrums des Transportbandes (3) eine Tragmatte (4) zur Auflage des Fachmaterials bildet, und die im Bereich des Tragmaterials (23) an eine Unterdruckquelle anschließbar sind, wobei sich vor und hinter dem Transportband (3) jeweils eine Abdeckplatte (28,29) an die Tragmatte (4) anschließt, dadurch **gekennzeichnet,** daß im Anfangs- und/oder Endbereich (3a,3b) des Transportbandes (3) ein sich über die Breite des Transportbandes (3) erstreckendes, zwischen der zugehörigen Abdeckplatte (28,29) und dem Transportband (3) wirksames leistenförmiges Dichtungselement (33) vorgesehen ist, das an seinem oberen Rand gehalten ist, sich frei nach unten erstreckt und in die Förderrichtung (11) elastisch biegbar oder komprimierbar ist.

2. Zuschneidevorrichtung nach Anspruch 1, dadurch **gekennzeichnet,** daß das Dichtungselement (33) längs des Transportbandes (3) hin und her bewegbar ist.

3. Zuschneidevorrichtung nach Anspruch 2, dadurch **gekennzeichnet,** daß dem Dichtungselement (33) ein Antrieb zugeordnet ist, der das Dichtungselement (33) zum Zuschneiden gegen die Rückfläche des hintersten Transportbandgliedes (15a) bzw. gegen die Frontfläche des vordersten Transportbandglieds (15b) der Tragmatte (4) bewegt und zum Transport in seine Freigabestellung bewegt.

4. Zuschneidevorrichtung nach dem Oberbegriff des Anspruchs 1 oder nach Anspruch 1, dadurch **gekennzeichnet,** daß im Anfangs- oder Endbereich (3a,3b) des Transportbandes (3) ein sich über dessen Breite erstreckendes, zwischen dem zugehörigen Abdeckblech (28,29) und dem Transportband (3) wirksames Dichtungselement (42) angeordnet ist, das in der Längsrichtung des Transportbandes hin und her verschiebbar gelagert ist und durch einen Antrieb zum Zuschneiden gegen die Rückseite des hintersten Transportbandgliedes (15a) bzw. gegen die Frontseite des vordersten Transportbandglieds (15b) der Tragmatte (4) bewegt wird und zum Transport in seine Freigabestellung bewegt wird.

5. Zuschneidevorrichtung nach wenigstens einem der vorherigen Ansprüche, dadurch **gekennzeichnet,** daß das Dichtungselement (33;42) an der Unterseite der zugehörigen Abdeckplatte (28,29) vorzugsweise bewegbar gehalten ist.

6. Zuschneidevorrichtung nach wenigstens einem der vorherigen Ansprüche, dadurch **gekennzeichnet,** daß das Dichtungselement (33) durch einen leisten- oder lippenförmigen Dichtungskörper (35;42) gebildet ist, der hochkant angeordnet ist.

7. Zuschneidevorrichtung nach Anspruch 6, dadurch **gekennzeichnet,** daß der Dichtungskörper (35) an seinem oberen Rand an einem Dichtungstragkörper (36) angeformt oder befestigt ist.

8. Zuschneidevorrichtung nach wenigstens einem der vorherigen Ansprüche, dadurch **gekennzeichnet,** daß das Dichtungselement (33) durch einen Schieber gebildet ist.

9. Zuschneidevorrichtung nach wenigstens einem der vorherigen Ansprüche, dadurch **gekennzeichnet,**

daß das Dichtungselement (33) sich so weit nach unten erstreckt, daß es in seiner Abdichtungsstellung die zugehörige Stirnfläche des hintersten bzw. vordersten Transportbandgliedes (15a,15b) der Tragmatte (4) überlappt.

10. Zuschneidevorrichtung nach wenigstens einem der Ansprüche 2 bis 9,
dadurch **gekennzeichnet,**
daß der Dichtungskörper (35) in der Transportrichtung (11) elastisch ausbiegbar ist.

11. Zuschneidevorrichtung nach wenigstens einem der Ansprüche 2 bis 10,
dadurch **gekennzeichnet,**
daß das Dichtungselement (3) elastisch in seine Abdichtungsstellung beaufschlagt ist.

12. Zuschneidevorrichtung (1) für Flachmaterial wie Stoffe, Folien oder dgl., mit einem Fördertisch (2) mit einem um Umlenkrollen (20) umlaufend antreibbaren Transportband (3), das aus in Förderrichtung hintereinanderliegend angeordneten und gelenkig miteinander verbundenen Transportbandgliedern (9) besteht, die im Bereich des Obertrums des Transportbandes (3) mit einem luftdurchlässigen Tragmaterial, insbesondere in Form von nach oben stehenden Borsten (23) besetzt sind, dessen Oberseite eine Tragmatte (4) zur Auflage des Flachmaterials bildet, und die im Bereich des Tragmaterials (23) an eine Unterdruckquelle anschließbar sind, wobei seitlich neben der Tragmatte (4) ein mit einem Unterdruck beaufschlagbares Rohr (44) angeordnet ist, zwischen dem und der Tragmatte (4) eine in Längsrichtung des Transportbandes (3) verlaufende Dichtung (49) angeordnet ist, wobei das Rohr (44) durch Verbindungslöcher (55) mit dem das luftdurchlässige Tragmaterial enthaltenden Raum (32) in Verbindung steht und wobei die Stofflage (5) mit einer Folie (30) abgedeckt ist,
dadurch **gekennzeichnet,**
daß die Dichtung (49) zwischen dem Rohr (44) und den Seitenwänden (27) der das luftdurchlässige Tragmaterial tragenden Transportbandglieder (9) angeordnet ist, daß die Transportbandglieder (9) im Bereich der Tragmatte (4) einen im wesentlichen geschlossenen Boden (26) bilden, daß wenigstens ein Verbindungsloch (55) oberhalb der Dichtung (49) angeordnet ist und daß die Folie (30) das Rohr (44) oder einen von ihm seitlich nach innen vorspringenden, den Randbereich der Tragmatte (4) übergreifenden Abdeckschenkel überlappt.

13. Zuschneidevorrichtung nach Anspruch 12,

dadurch **gekennzeichnet,**
daß die Oberseite (53) des vorzugsweise viereckigen Rohres (44) etwa mit der Oberseite der Tragmatte (4) abschließt.

14. Zuschneidevorrichtung nach Anspruch 12 oder 13,
dadurch **gekennzeichnet,**
daß die Dichtung durch eine Dichtungslippe oder einen Dichtungsschlauch gebildet ist.

15. Zuschneidevorrichtung nach wenigstens einem der Ansprüche 12 bis 14,
dadurch **gekennzeichnet,**
daß die Dichtung in einer vorzugsweise U-förmigen, an der Innenwand (45) des Rohrs (44) befestigten Halterung (52) angeordnet ist.

16. Zuschneidevorrichtung nach wenigstens einem der Ansprüche 12 bis 15,
dadurch **gekennzeichnet,**
daß die Dichtung (49) sich in mittlerer Höhe des Rohrs (44) befindet.

FIG.1

FIG.2

FIG. 3

FIG.4